# EUROPEAN PATENT APPLICATION

(11) **EP 1 335 313 A2**
(43) Date of publication of application: **13.08.2003**
(21) Application number: 03250474.8
(22) Date of filing: 27.01.2003
(51) Int. Cl.: G06F 17/60

(54) **Multi-property enterprise promotions**

(30) Priority: 01.02.2002 US 61434
(71) Applicant: Harrah's Operating Company, Inc., Memphis, TN 38117 (US)
(72) Inventor: Stanley, Tim, Henderson, Nevada 89052 (US); Reeves, Timothy J., Overland Park, Kansas 66223 (US); Parks, Ben, Las Vegas, Nevada 89123 (US); Norton, David, Las Vegas, Nevada 89145 (US)
(74) Representative: McLeish, Nicholas Alistair Maxwell

(57) **Abstract**

Multiple, simultaneous enterprise promotions are enabled by an enterprise promotions application, the promotions definable to apply to a single location, a plurality of locations, or all of the enterprise's locations. The enterprise promotions application receives data from the locations regarding patron activity, from which the system generates entries in one or more promotions according to each promotion's rules. For a promotion, patrons' entries can be activated for one or more drawings, wherein one or more winning entries are selected. The system also provides for the automatic, rules-based generation of comps and the management thereof.

## Description

### BACKGROUND OF THE INVENTION

### Field of the Invention

The present invention relates generally to enterprise promotions and, in particular, to managing multiple promotions for an enterprise across multiple locations.

### Description of Background Art

Promotions and sweepstakes are a key tool for increasing customer traffic and stimulating specific customer behaviors. Different kinds of promotions are widely used in a variety of markets, including casinos and other gaming and entertainment industries. In a casino for example, casino patrons or players register to participate in one or more promotions at the casino. Individual players "enter" in a promotion through their gaming activity and, in some case, through non-gaming activity such as eating at restaurant and staying in the hotel. The number of entries a player receives is based on the player's activity and the rules of the particular promotion. After entries for a promotion have been accumulated, a drawing is held to select at random one or more winning entries from the pool of entries for a promotion. The patrons associated with the winning entries receive the associated prize. Enterprise promotions were traditionally conducted using paper entries. Advances in enterprise promotions have taken advantage of the abilities of computers to collect large amounts of data and automate certain processes for conducting the promotions, such as tracking entries and conducting drawings. Computerized systems, however, are usually designed to conduct a single promotion at a single property. Such systems lack the ability to perform multiple promotions for an enterprise simultaneously. In such cases, manual and paper-based processing is required for a second promotion. In current systems where only a single promotion is possible, the promotions cannot be customized to each of an enterprise's locations. Moreover, the computerized systems typically can only process entries in batch processes (e.g., nightly); these systems do not provide for any real-time or proactive management of promotions in addition to the normal batch processes or updates.

In addition, existing promotion systems enable an enterprise to conduct promotions at either the enterprise or property level, but not both. Promotions at the enterprise or multi-property level apply to patron activity at multiple locations, whereas property-specific promotions apply only to activity at the property where the promotion is held. In existing systems, which do not allow for several promotions that may apply at the property, multi-property, or enterprise level, patron activity at a particular location causes entries in a single promotion only. Promotions at the enterprise or multi-property level are desirable because such promotions can be funded by the enterprise and thus have larger prizes. Local, property-specific promotions are tailored to the local market and are typically smaller in scale and funded by the property. The present technology does not allow an enterprise to conduct multiple promotions across different sets of properties where patron activity at one or more of the enterprise's properties generates entries in the relevant promotions.

Maintaining and supporting one or more promotions over several properties can be labor intensive, often requiring daily manual processing. Without a centralized system, on-site Information Technology (IT) support is required at each location, even for minor adjustments to a promotion. This in turn causes long turnarounds for adjustments and, possibly, system downtimes. Furthermore, existing systems suffer from limited points of entry for customers to manage their accounts, causing longs waits and customer frustration. Because a fundamental goal of a promotion is to encourage customer participation, it is desirable to enhance customer service by eliminating these technical limitations.

### SUMMARY OF THE INVENTION

The enterprise promotions system enables the creation, management, and execution of multiple, simultaneous promotions at both the single and multiple property levels. In one embodiment, the enterprise promotions system acquires data on various types of patron activity through various management systems at each of the enterprise's locations. The patron activity that leads to the generation of qualifying entries for each patron may include gaming, lodging, eating, attending an event, and purchasing, and this patron activity may be in one location or occur across multiple locations. Using this patron activity data, the system applies a set of rules to generate qualifying entries for each promotion, wherein each promotion's rules dictate how many qualifying entries are generated for each patron. In one embodiment, patrons activate their qualifying entries for one of one or more drawings in each promotion. Using the activated (or otherwise eligible) entries for each drawing in each promotion, the enterprise promotions system selects a number of winning entries. Patrons to whom the winning entries belong receive a prize.

If two or more promotions are running and apply to the same location, patron activity at that location may lead to the generation of qualifying entries for patrons in each promotion. Because the rules for different promotions may be unique, the enterprise can use different promotions to uniquely and specifically target certain patrons and patron activity. In addition, allowing patrons to activate their qualifying entries for each drawing in a given promotion gives the patrons control over which drawings (and associated prizes) are of greatest interest to them. In an embodiment, a patron's activated entries that are not selected in a drawing roll over to the next drawing in a promotion, if any, giving patrons additional chances to win.

One embodiment of an enterprise promotions application includes modules for creating and modifying multiple promotions, for allowing patrons to view and activate their entries in a promotion, for making manual adjustments, for drawing one or more winners for a promotion, and for security and administration. The enterprise promotions application communicates with a plurality of locations over a network. Patrons engage in commercial activity at the locations, which have one or more systems for transmitting information regarding this activity to the enterprise promotions application. In one embodiment, the locations are casinos that have systems for managing and reporting on patron activity, which may include ― depending on the availability of services at the property ― gaming at machines and tables, staying at hotels, eating at restaurants, attending shows, and buying merchandise.

In one embodiment of the invention, some or all of the locations are casino properties, wherein the promotions are definable among a set of properties or for all properties (i.e., at the enterprise or "brand" level). In another embodiment, the locations or properties include cruise ships, restaurants, and other retail environments. In other aspects, the locations may include virtual locations, such as web sites and the like. Accordingly, the system enables multi-tiered, multiple promotions, each promotion being associated with a single property, a plurality of properties, or all properties in the enterprise. In another aspect of an embodiment, cross-location management and real-time adjustments to promotions are enabled.

The invention allows promotions' operators employed by the enterprise to monitor promotion performance and make real-time adjustments while driving customer traffic in real-time. This further allows streamlining on and off-site customer experience. The invention provides a mechanism for centralized control over promotions at one or more locations, while easing maintenance and support efforts. In another aspect of an embodiment, a system architecture assists in enforcing and maintaining any pertinent regulatory requirements. In an embodiment, the enterprise promotions system further allows system operators to create and modify the rules of a promotion. Real-time adjustment of promotion formats allows for promotions to be created and modified by management staff. This avoids delay for IT customization, and the associated dependency on IT personnel for customization.

The handling of multiple promotions through a single system, enabling enterprise and location-wide promotions, creates cross-location opportunities for markets with multiple locations, and provides the ability to monitor promotions participation on a brand-wide basis with little effort at the property level. In addition, the system allows an enterprise to conduct a promotion across different jurisdictions having different, possibly conflicting, regulations that govern promotions. This further opens up cross-marketing opportunities for enterprise promotions.

### BRIEF DESCRIPTION OF THE DRAWINGS

Fig. 1 is a diagram of multiple, simultaneous promotions conducted by an embodiment of the enterprise promotions system.
Fig. 2 is a diagram of an example of a scheme of conducting simultaneous promotions at different sets of locations.
Fig. 3 is a schematic diagram of an embodiment of the enterprise promotions system at the enterprise level.
Fig. 4 is a block diagram of an embodiment of the enterprise promotions system at the location or property level.
Fig. 5 is an embodiment of a user interface for modifying a promotion.
Fig. 6 is an embodiment of a screen flow for the manual adjustments function.
Fig. 7 is an embodiment of a flow for the patron activation and current status function.
Fig. 8 is flow of an embodiment of a drawing process.

### DETAILED DESCRIPTION OF THE PREFERRED EMBODIMENTS

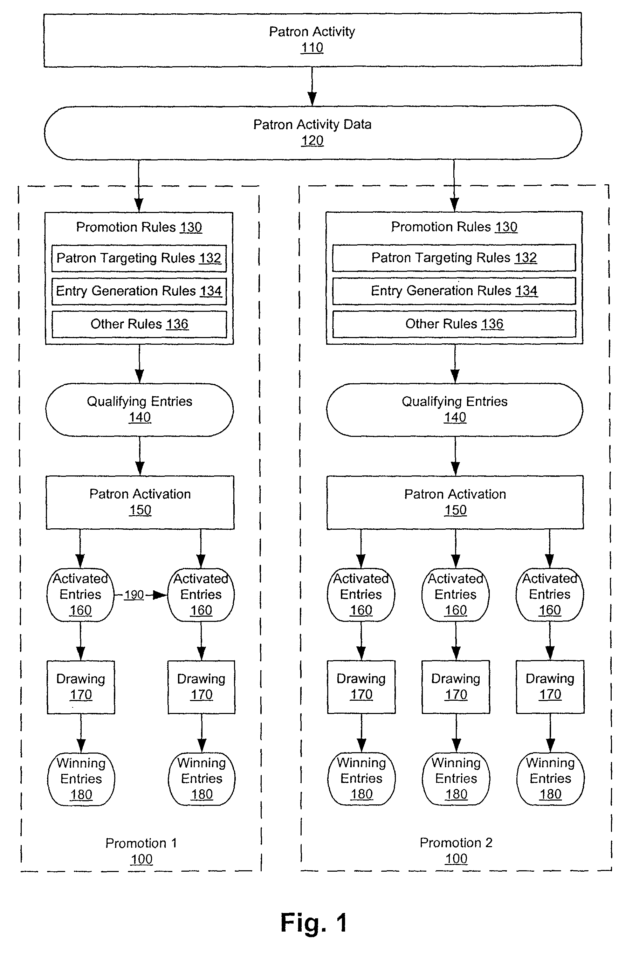

The diagram of Fig. 1 shows how multiple promotions 100 are implemented according to a preferred embodiment. Patrons of the enterprise engage in patron activity 110, which in an embodiment includes casino gaming, staying in a hotel, eating at a restaurant, seeing a show, and purchasing merchandise. The enterprise collects patron activity data 120 relating to the patron activity 110, which is accessible by an enterprise promotions system. The patron activity is preferably activity for which data relating thereto can be electronically collected.

Each promotion 100 is defined, inter alia, by a set of promotion rules 130. In response to the patron activity 110, as represented by the patron activity data 120, the enterprise promotions system applies the promotion rules 130 from one or more promotions 100 to generate qualifying entries 140 in the promotions 100, where each qualifying entry 140 is associated with a patron and based on the patron's activity. In an embodiment, the promotion rules include sets of patron targeting rules 132, entry generation rules 134, and other rules 136. The patron targeting rules 132 enable the system to precisely target a set of patrons with the promotion 100, where the set of patrons is defined by, e.g., certain shared characteristics identified in the patron targeting rules. The entry generation rules 134 define whether and how many qualifying entries 140 are generated in response to the patron activity 110. In addition, other rules 136 are used to, for example, define what activity can be used to generate qualifying entries 140 and the number of entries generated when an offer is redeemed.

Importantly, the same patron activity (e.g., a night's stay at a hotel by a particular patron on a particular occasion) may lead to the generation of qualifying entries 140 for a patron in several different promotions 100 (e.g., in promotions 1 and 2), including single-property and multi-property promotions 100, depending on the configuration of the system. This is because multiple promotions apply their promotion rules 130 to the patron activity data 120 to generate qualifying entries 140 associated with each promotion 100.

One type of promotion 100 has one or more drawings 170. In an embodiment, a patron activates some or all of his qualifying entries 140 for inclusion in a particular drawing 170. In various embodiments, qualifying entries 140 can be activated by each patron, by a system operator, or both, or the entries 140 can be automatically activated for the drawings. When a drawing 170 is held, one or more winning entries 180 are selected from the activated entries 160 for that drawing 170. In an embodiment, the system may be configured to rollover 190 activated entries 160 for one drawing to a subsequent drawing. In such a case, a patron who does not win a promotion's first drawing may still participate in future drawings of the promotion, as long as the promotion has one or more drawings that have not been conducted.

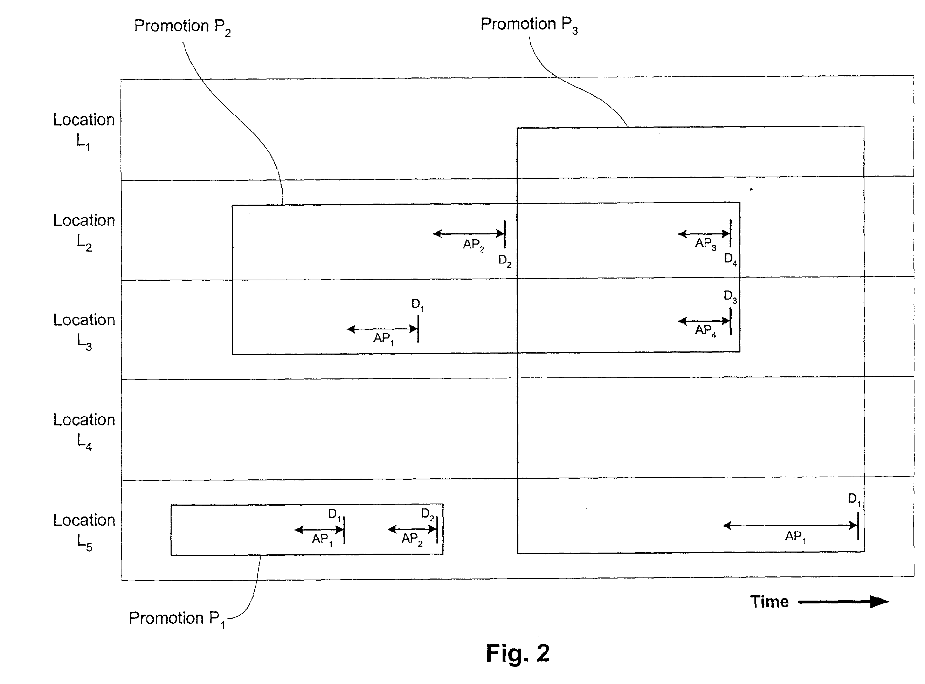

Fig. 2 shows an example of several enterprise promotions held across various locations.

The horizontal axis of the diagram represents time, and the vertical axis shows the applicability of each promotion Pₙ to the five locations Lₙ of the enterprise. The promotion that begins first, P₁, is an example of a location-specific promotion, as it applies only to location L₅. While P₁ is pending, as depicted by the box P₁, patron activity associated with location L₅ leads to the generation of qualifying entries according to the rules of promotion P₁ (as shown in Fig. 1). Promotion P₁ has two drawings, D₁ and D₂, wherein winning entries are selected from the pool of activated entries for each drawing. Qualifying entries can be activated for a particular drawing during an activation period AP that precedes each drawing. The activation period can be set, for example, to be a specific time period directly preceding the drawing (e.g., one hour), which helps to ensure that participating patrons will be present for the drawing.

Promotion P₂ applies to multiple locations, L₂ and L₃, and has four drawings that take place therein. Drawings D₁ and D₃ are held at location L₃, whereas drawing D₂ and D₄ are held at location L₂. For promotion P₂, patron activity at either location L₂ or L₃ can lead to entries in the promotion. Patrons can thereafter activate their entries for one of the drawings at either location during any of the activity periods AP₁₋₄, regardless of where the qualifying patron activity that resulted in those entries occurred. The promotion is thus conducted across the two locations, wherein activity at either location can lead to qualifying entries, which can be activated at either location for one of the drawings.

Promotion P₂ overlaps in time with promotions P₁ and P₃, and is therefore conducted simultaneously with those promotions during those periods. Promotion P₃ is an enterprise-level promotion, applying to each of the enterprise's locations. Any patron activity associated with the enterprise may lead to entry generation in promotion P₃ according to its rules. During the period of time while promotions P₂ and P₃ are running simultaneously, as indicated by their overlap in Fig. 2, patron activity at locations L₂ and L₃ may lead to qualifying entries in both promotions P₂ and P₃; however, patron activity at locations L₁, L₄, and L₅ can only lead to qualifying entries in promotion P₃. To effect both the location-specific and multiple location promotions, the system applies each promotion's rules to the patron activity data obtained at the set of locations to which the promotion applies.

Accordingly, the system conducts simultaneous promotions at the enterprise, multiple property, and single property levels.

### System Architecture

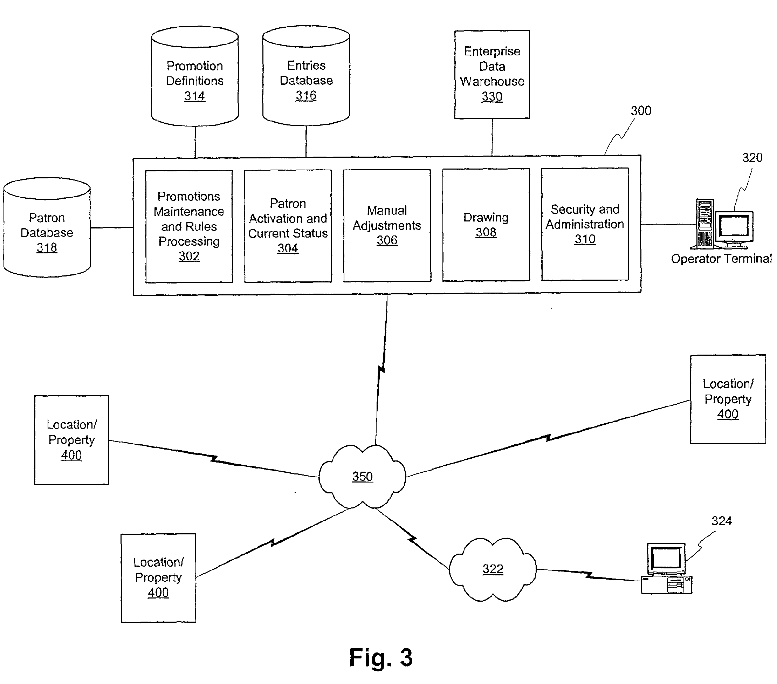

Fig. 3 is a schematic diagram of an embodiment of the enterprise promotions system at the enterprise level. The enterprise comprises a number of locations 400 coupled together via a network 350. The network 350 may be, e.g., the Internet or an enterprise's private network (e.g., a WAN, VPN, or the like). In an embodiment, the enterprise promotions system is further coupled to the Internet 322, whereby patrons can access the enterprise promotions system using a personal computer 324 connected to the Internet 322.

The enterprise promotions system is managed by an enterprise promotions application 300. The enterprise promotions application 300 is accessible from an operator terminal 320. The application 300 is preferably run on a server, accessible via a client interface or application on each terminal 320. In one embodiment, the operator terminal 320 comprises a computer system, which is coupled to the network 350. There may be any number of operator terminals 320 coupled to the system, and, in a preferred embodiment, each location 400 has an operator terminal 320 adapted to access the enterprise promotions application 300. The enterprise promotions application 300 may be on a computer system at one of the enterprise's locations 400, or at a remote location. Having the enterprise promotions accessible from an operator terminal 320 at the enterprise's locations 400 facilitates the cross-property management capabilities of the system. For example, an operator could manually adjust a patron's entries in an enterprise-level promotion from an operator terminal at a particular location 400, and this adjustment would automatically affect the patron's account in each of the enterprise's properties.

The functionality of the enterprise promotions application 300 is divided into several modules for performing related tasks. In a preferred embodiment, the modules of the enterprise promotions application 300 include a Promotions Maintenance and Rules Processing module 302, a Patron Activation and Current Status module 304, a Manual Adjustments module 306, a Drawing module 308, and a Security and Administration module 310. Although the enterprise promotions application 300 is described in one embodiment as a single application, its functions could be performed by more than one application, which may reside on different systems. The enterprise promotions application 300 is coupled to a Promotion Definitions database 314 and an Entries database 316, and the application 300 is further coupled to a Patron database 318. The enterprise promotions application 300 is also coupled to an Enterprise Data Warehouse 330 for storing and retrieving archived data relating to past promotions.

The Promotions Maintenance and Rules Processing (PMRP) module 302 enables a promotions operator to create and define one or more promotions. An operator accesses the PMRP module 302 to create and define a promotion. Each promotion may apply to the particular location from which the promotion is created, or it may apply to several or all of the locations of the enterprise. In an embodiment, the PMRP module 302 is accessible from any of the enterprise's properties, so that promotions created at one location may apply to other locations. In this way, an operator can use the PMRP module 302 to maintain promotions that apply to remote locations. The PMRP module 302 also enables an operator to modify promotions after they have been created.

In another aspect of an embodiment, the PMRP module 302 ensures that the promotions that are created or modified comply with any relevant regulatory rules that govern such promotions.

The Patron Activation and Current Status (PACS) module 304 provides patrons with the ability to activate their entries for one or more drawings of a particular promotion. Once activated, a patron's entries will be eligible for the associated drawing, as shown in Fig. 1. In an embodiment, the PACS module 304 also provides for instant prizes to be awarded during the entry activation process.

The PACS module 304 also enables patrons to access information regarding their eligibility, their current entries in various promotions, and drawing times and other information for the relevant promotions. In one embodiment, a patron can access the PACS module 304 over the Internet 322 from a personal computer 324, or from any other web device connected thereto. In another embodiment, one or more customer service interfaces 420 are located at a property 400, which are communicatively coupled to the PACS module 304 for providing the associated information to patrons. In one embodiment, a customer service interface 420 comprises a computer having an output display terminal and a user input, such as a card reader and a touchscreen. Patrons can access a customer service interface 420 by swiping their cards through the card reader (i.e., "carding in"). The interface may be configured to provide information to the patrons and allow them to activate their qualifying entries for a given promotion (described in detail below). The customer service interface 420 may be housed in a kiosk or other user accessible housing.

The Manual Adjustments (MA) module 306 enables the promotions operator to monitor the performance and status information of a particular promotion in real-time. In addition, the MA module 306 enables the operator to view information specific to individual patrons and make adjustments to patron entries and other patron-specific information. This functionality might be used, for example, when a patron complains, and the operator desires to credit the patron's account. The ability to make manual adjustments is also useful when there are technical problems with the system, and resulting errors need to be corrected. An adjustment made to a patron's entries by an operator at one property affects the patron's entries in the promotion at each of the properties to which the promotion applies; therefore, the adjustment does not need to be made separately by an operator at each property.

The Drawing module 308 enables the promotions operator to conduct drawings for the various promotions, supporting multi-level promotions (i.e., promotions with multiple drawings) and multi-property promotions. In an embodiment, the Drawing module 308 has an interface to display the winners of the drawings to the patrons. In one embodiment, each property 400 where drawings are conducted includes a display system 430 coupled to the Drawing module 308 for displaying the drawing results. The Drawing module 308 may advantageously be coupled to a customer service interface 420 for printing entries and winning tickets, as determined by the Drawing module 308.

The Drawing module 308 may also be accessible from an operator terminal 320, wherein the module 308 generates reports regarding the drawings and sends that information to the operator terminal 320. The reports may advantageously contain valuable statistical information regarding patron participation, including a listing of patrons that activated entries, the number of entries activated for each patron, entries not activated, and other useful information. In addition to customized reports, the Drawing module 308 may also be adapted to send promotions data to, e.g., the Enterprise Data Warehouse 330.

In one embodiment, a Security and Administration module 310 reduces dependence on IT personnel by enabling the promotions operator to perform routine functions, such as assigning internal users and day-to-day internal user setup. With this module 310, the operator can designate other internal users and their permission or access levels (which may depend on the property from which the system is accessed), as well as varying permission levels for different promotion management and reporting tasks.

As noted, the Promotion Definitions database 314 stores information regarding the promotions, such as each promotion's attributes and rules. The attributes of a promotion according to a preferred embodiment include:
the start and end dates for when the promotion is running;
the number of drawings and drawing date(s) and time(s);
the number of winners and associated prizes for each drawing;
an activation period for each drawing; and
the locations to which the promotion applies.

A promotion's rules define how the system responds to events to conduct the promotion. For example, a promotion's patron targeting and entry generation rules dictate how entries in the promotion are generated based on patron activity. When an operator uses the PMRP module 302 to create a new promotion or modify the attributes or rules of an existing promotion, these additions or changes are reflected in the Promotion Definitions database 314.

When entries are generated for each promotion in accordance with the promotion's rules for entry generation, the entries are stored in the Entries database 316. The Entries database is coupled to the enterprise promotions application 300 for receiving data relating to the entries generated by the PMRP module 302 for each promotion. In an embodiment of the system, the Entries database 316 stores information regarding the entries in each promotion, the patrons with which the entries are associated, and whether each entry has been activated for a particular drawing. The Entries database 316 is further adapted to provide this information to the enterprise promotions application 300 upon request. For example, the PACS module 304 may retrieve entries data from the Entries database 316 and may also change the activation status of the entries. The MA module 306 may be used to view and modify the entries for a particular patron, and the Drawing module 308 is adapted to retrieve from the Entries database 316 the activated entries and their associated patrons for each drawing before conducting the drawing.

The Patron database 318 is adapted to provide the enterprise promotions application 300 with data regarding individual patrons, or players. The Patron database 318 includes patron profiles for patrons from all of the supported enterprise properties. Patron accounts in the Patron database 318 include detailed information such as the patron's preferences, interests, gaming and lodging history, credit rating, comp level, theoretical win value, and accumulated activity points. A patron's theoretical win value is determined according to gaming data or other patron activity accumulated at any of the locations affiliated with the enterprise. Activity points are determined in part by patron activity, but may also be augmented by special offers and various other promotional programs.

Data accumulated by the management systems (described below) are updated to the Patron database 318, where they may be accessed by personnel at any of the enterprise's locations throughout the network 350. Generally, the various management systems track patron activity by a unique patron ID associated with each patron's account in the Patron database 318. In one embodiment, patrons are issued player tracking cards, which are used to provide the patrons' ID to the various management systems. The player tracking cards have a magnetic strip with the patron's ID encoded thereon, and the cards can be swiped at card readers coupled to the various management systems to provide the systems with the patron's identity. In this way, patron activity at any of an enterprise's locations is preferably immediately accessible via the network 350. On-line access to a patron's activities and other data at all of its locations allows the enterprise to implement cross-property incentive programs, manage customer offer programs more effectively, and provide more personalized services to its patrons.

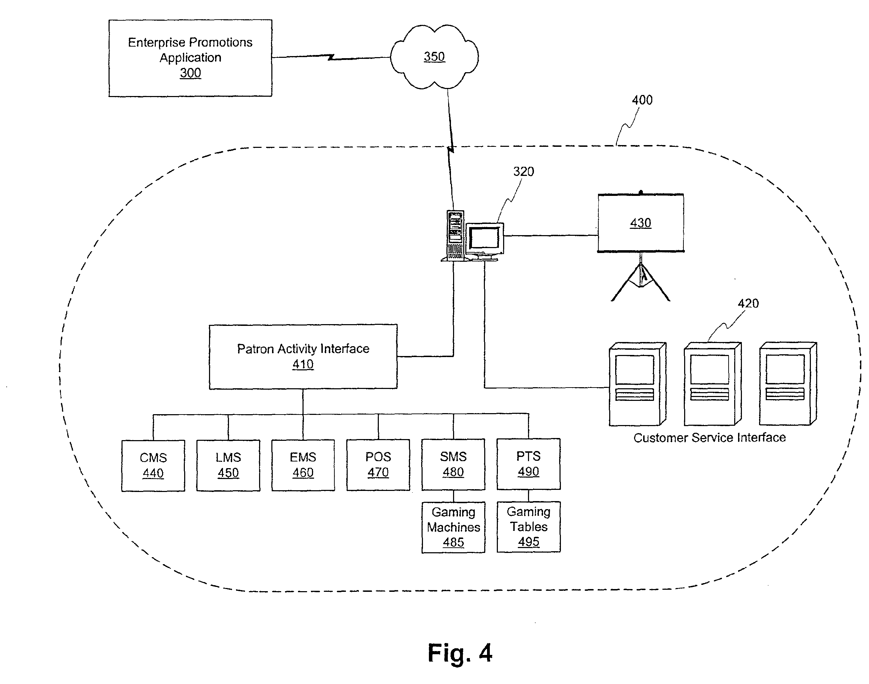

Fig. 4 is a block diagram of an embodiment of the enterprise promotions system at the location or property level. Where a location 400 is a physical one (e.g., a casino), it may be called a property; however, the enterprise promotions system can support other types of enterprise locations, such as web sites. Each enterprise location 400 includes a Patron Activity interface 410 and, preferably, one or more operator terminals 320, one or more customer service interfaces 420, and a display system 430. Having an operator terminal 320 at each property 400 allows local promotions operators to create and customize promotions at the property level, in real-time, and in response to market conditions. As noted, the properties 400 are coupled to each other and to the enterprise promotions application 300 via network 350. In an embodiment, network 350 is a wide-area network. An operator terminal 320 or another computer system may serve as a gateway from the property 400 to the network 350.

At the property 400 is a Patron Activity interface 410, which in one embodiment uses an API for sending data pertaining to local patron activity over the network 350 to the enterprise promotions application 300. The Patron Activity Interface 410 communicates with several computer systems for monitoring and tracking casino operations. Depending on the services offered at a property 400, any combination of the following systems might be used to gather patron activity data: a Casino Management System (CMS) 440, a Lodging Management System (LMS) 450, an Event Management System (EMS) 460, a Point of Sale system (POS) 470, a Slot Monitoring System (SMS) 480, and a Pit Tracking System (PTS) 490. U.S. Patent 5,761,647, "National Customer Recognition System and Method," the contents of which are fully incorporated by reference herein, explains how a CMS 440, a LMS 450, an EMS 460, a POS 470, a SMS 480, and a PTS 490 are used to track patrons' gaming and non-gaming activity at a plurality of affiliated casino properties communicatively coupled by a wide-area network.

In one embodiment, patrons are issued tracking cards to interface with the enterprise promotions system. Each tracking card preferably includes a magnetic strip, microchip, or other mechanism for storing machine-readable data thereon. When a patron performs some activity at a location, the patron uses the tracking card to interface with the system. For example, in the case of magnetic strip cards, the patron swipes the card through a card reader. In an alternate or additional method of tracking patron activity, the patron or enterprise personnel can manually enter a patron ID number into a terminal coupled to the system. Depending on the promotions system and enterprise, this activity may include playing a game in a casino, making a reservation, staying in a hotel, purchasing something in a retail environment, eating at a restaurant, and attending a show or other event.

In one embodiment, the CMS 440 receives patron data by way of their tracking cards swiped at card readers, workstations, and dumb terminals located at various venues throughout the property and couples the received data to the Patron database 318. The CMS 440 may be a single, centralized system supported on a central LAN at a location, a distributed system comprising local management systems associated with each location's LAN, or a hybrid system including both centralized and distributed components.

The CMS 440 is further adapted to send data to the Patron Activity interface 410 when a patron redeems an offer. In the context of the present invention, one or more offers are sent to patrons, who may then redeem the offers at one of the locations. An offer is associated with an offer ID, which the system uses to track and identify the type of offer redeemed.

An operator may manually enter a redeemed offer into the CMS 440 from a local terminal 320. Alternatively, the patrons may redeem offers, e.g., from a home computer 324 coupled to the system over the Internet 322, at a customer service interface 420, or using other equipment at a location 400. When an offer is redeemed, the CMS 440 sends a data packet to the enterprise promotions application 300 that includes the offer ID that was redeemed and the patron who redeemed it.

The LMS 450 comprises the software necessary for managing hotel operations within the casino, including reservations, room service, and other activities associated with hotel operations. In a preferred embodiment of the invention, the LMS 450 communicates with the CMS 440 to search locally for selected customer information available on that system. However, LMS 450 may include its own local data store for customer data. The LMS 450 transmits data regarding patrons' lodging activity to the Patron Activity interface 410 when patrons check in and out of a hotel. In addition, the LMS 450 may transmit lodging data upon a request from the Patron Activity interface 410. The lodging data includes, for example, the dates that a patron stays at a hotel, room service activity, and billing information due to the patron's stay in the hotel.

The EMS 460 comprises software for handling ticketing information, reservations, and sales. The EMS 460 compiles patron activity data when patrons purchase tickets for an event (such as a show at the location), make reservations for an event, and attend the event. The EMS 460 transmits this data to the Patron Activity interface 410.

The POS 470 comprises accounting software for operating restaurants and retail venues within the location as well as software for transmitting charge information to the other management systems. For example, data relating to meals charged to rooms are transmitted from the POS 470 to the LMS 450, and data relating to redeemed meal comps are transmitted from the POS 470 to the CMS 440. The Patron Activity interface 410 receives data relating to patron's purchases at a location from the POS 470. This purchasing data includes, in an embodiment, the items or services purchased, the restaurant or retail venue where purchased, and the purchase amounts.

The SMS 480 comprises a computer system that monitors and tracks bets made by patrons at gaming machines 485. Gaming machines 485 may include slot machine, video poker machines, or the like. In a preferred embodiment, bet tracking is accomplished through a card reader (not shown) associated with a slot machine 485. A patron inserts his tracking card (described above) in the card reader to initiate bet tracking and removes it to terminate bet tracking. A patron's betting activity at a gaming machine 485 accumulates in the SMS 480 until the gaming session is terminated or when the CMS 440 requests an account status, at which time the data is transferred to the CMS 440. Bet tracking data accumulated by the SMS 480 includes the identification of the games played, the amount won or lost, and the time period that the patron played the game. U.S. Patent 5,429,361, the contents of which are fully incorporated by reference herein, describes one system for tracking the betting activity of casino patrons at gaming machines.

The PTS 490 automatically tracks patron activity at gaming tables 495. The PTS 490 is supported on a computer system that transmits patron activity data to the CMS 440. In one embodiment, the PTS 490 uses card readers associated with patrons' positions at the gaming tables 495 to track their betting activity. Alternatively, an employee of the enterprise, such as a pit boss, manually enters patrons' gaming data into the PTS 490. In one embodiment, data regarding betting activity include a patron's time at a gaming table 495 and the table's minimum bet. U.S. Patent 5,613,912, the contents of which are fully incorporated by reference herein, describes one system for automatically tracking the betting activity of casino patrons at gaming tables.

Each of the types of qualifying patron activity described above are communicated to the enterprise promotions application 300, which can generate entries in one or more promotions that apply to the particular location 400 depending on each promotion's rules. Because the patron activity data is transmitted to the system over the network 350, patron activity in a single location 400 can lead to entries in several promotions that may apply to the enterprise at the single location, multiple locations, or enterprise level.

### System Operation

### Overview

In an exemplary promotion for a casino, a promotion has a set of attributes and rules. The promotion is defined over a period of time within which patrons, or players, have opportunities to generate entries based on their patron activity and the promotion's rules for entry generation. An activation period is associated with one or more specific drawings wherein, during an activation period, patrons can activate their entries for the associated drawing.

The rules of a promotion specify what actions should be taken responsive to certain events. For example, a promotion has a set of patron targeting, play eligibility, and entries generation rules, which determine whether and how a patron earns entries through the patron's activity at a location. The promotions may also include rules relating to drawings, which may specify whether a patron's activated entries will be rolled over to subsequent drawings.

### Setting Up a New Promotion

The enterprise promotions system enables a promotions operator to set up new promotions and modify existing ones. Once the promotions operator has decided upon a particular promotion, the operator creates the new promotion using the enterprise promotions application 300. In a preferred embodiment, promotion creation can be performed from any operator terminal 320. Accessing the enterprise promotions application 300, an operator first creates a promotion and configures its attributes. In one embodiment, the promotions include the following attributes:
Promotion start and expiration dates
Dates and times for drawings (one or more)
Activation periods for each drawing
Number of winning entries and associated prizes for each drawing
Locations associated with the promotion (one or more)

As illustrated in Fig. 2, promotions can be either location-specific or apply to multiple locations, including a subset of the enterprise's locations or to all of the enterprise's locations (i.e., an enterprise-wide promotion).

After the promotion's basic attributes are defined, the operator defines a set of rules that apply to the promotion by accessing the PMRP module 302. In an embodiment, a promotion's rules are structured in the form: "*If* [condition] *Then* [action]." The "*If*" section of the rule contains one or more conditions that trigger the rule, and the conditions map to function calls that retrieve and evaluate the condition. The *"Then"* section of the rule specifies a set of actions to be performed if the set of conditions occur. The set of actions are taken if the set of conditions are true, and the actions map to function calls that execute those actions.

In the context of the enterprise promotions system, for example, an entry generation rule might contain an action for generating entries for a patron if the patron plays a predetermined amount in a slot machine: *"If* [patron's coin in >$300], *then* [generate 10 entries]." In another example, a post-drawings rule could be used to rollover a patron's activated entries into a subsequent drawing for the promotion: *"If* [the patron is not a winner], *then* [move entries to next drawing]."

In one embodiment, the PMRP module 302 includes a rules editor/engine for defining and processing the rules associated with each promotion. A rules editor/engine is a software package that is used to create and process the rules of a promotion. A rules editor/engine contains software for editing rules and for processing the rules. Once defined, a promotion's attributes and rules are stored in the Promotion Definitions database 314.

Rules engines are particularly beneficial where there are a large number of rules and where the rules may change frequently. In either case, the rules engine beneficially enables a user ― such as a promotions operator ― to encode new rules using a language that a business user can easily comprehend. By reducing the reliance on technology personnel, associated costs and turnaround times are reduced.

In one embodiment of the enterprise promotions system, the rules associated with each promotion are be grouped into rule sets, wherein the rules in each rule set trigger, or are applied, upon different events. An exemplary promotion includes the following rule sets:
Play Eligibility
Patron Targeting
Play Entry Generation
Offer Redemption
Post-Drawing

The Play Eligibility rule set enables the system to determine whether a patron's activity (e.g., gaming, lodging, purchasing, attending an event, etc.) is eligible to generate entries in the promotion. The system maintains a state that indicates whether the patron's activity is eligible in a "Play" variable. The following table lists examples of variables that the Play Eligibility rule set rules use to evaluate conditions, and the actions that any of these rules may take if the conditions are true.

| **Variables** | **Potential Actions** |
|---|---|
| Game ID / Activity Code | Set Play to be eligible |
| Day of Week / Time of Day / Date Hold Percentage (a value that indicates a game's hold) | Set Play to be not eligible |

For example, a Play Eligibility rule for not allowing patrons to earn entries by playing a particular game on Saturdays is: *"If* [the Game ID = 12345] *and* [the Day of Week = Saturday], *then* [set Play to be not eligible]."

Similarly, the Patron Targeting rule set enables the system to determine whether the patron is eligible in the promotion or drawing. The system maintains a state that indicates whether each patron is eligible to earn entries, which may be stored in the Patron database 318. The following table lists examples of variables that the Patron Targeting rule set rules use to evaluate conditions, and the actions that any of these rules may take if the conditions are true.

| **Variables** | **Potential Actions** |
|---|---|
| Patron X's Hold Percentage (a value that indicates a patron's hold based on the patron's play history) Patron Account (new to property or brand) Tier Patron Mail Code Offer Code Day of Week / Time of Day / Date Patron in Target List (filename) | Set Patron X to be eligible Set Patron X to be not eligible |

These variables are patron-specific and, in one embodiment, are stored in and retrievable from the Patron database 318. An example of a Patron Targeting rule for only allowing patrons to earn entries if their hold percentage is above a predetermined value is: *"If [Patron* X's Hold Percentage > Y], *then* [set Patron X to be eligible]."

The Patron Targeting rule set advantageously allows the enterprise to specifically target patrons for each promotion. As can be appreciated, the rule set allows the enterprise to specify a set of conditions or attributes that define which patrons can participate in a particular promotion. In one embodiment, the enterprise specifically identifies patrons that may participate in a promotion by placing those individuals in a target list. The target list is preferably a data file stored within or accessible to the promotions system. This target list allows enterprise personnel to use of any external patron targeting mechanism (such as data mining) to construct a list of patrons to be eligible for a particular promotion. As shown in the table above, a Patron Targeting rule can be based on whether a patron is included in the target list. This gives the enterprise a very high level of control to target patrons with a promotion, in addition to generalized rules for patron targeting.

The Play Entry Generation rule set enables the system to generate entries for a patron in a promotion based on the patron's activity while the promotion is pending. The following table lists examples of variables that the Play Entry Generation rule set rules use to evaluate conditions, and the actions that any of these rules may take if the conditions are true.

| **Variables** | **Potential Actions** |
|---|---|
| Trips Frequency in Time Period Patron's Hold Percentage in Time Period Entries Accrued in Time Period Minutes Played in Time Period Patron's Hold Percentage Patron Account Tier Offer Code Game Code Day of Week / Time of Day / Date Amount Won/Loss | Generate X entries Generate X entries for every [hold percentage, minutes played, amount won, etc.] |

An example of an Entry Generation rule that gives a patron entries for playing a game is: *"If* [Game Code = Y], *then* [generate X entries for Patron Z]."

The Offer Redemption rule set specifies rules to perform when a patron redeems a coupon. The following table lists examples of variables that the Offer Redemption rule set rules use to evaluate conditions, and the actions that any of these rules may take if the conditions are true.

| **Variables** | **Potential Actions** |
|---|---|
| Offer Code | Give X number of entries |
| Day of Week / Time of Day / Date | Give X times the number of entries |

The Post-Drawing rule set specifies rules to perform after a drawing is completed. The following table lists examples of variables that the Post-Drawing rule set rules use to evaluate conditions, and the actions that any of these rules may take if the conditions are true.

| **Variables** | **Potential Actions** |
|---|---|
| Entries Status (activated, un-activated, or de-activated) | Move entries to next drawing Move entries to promotion Y |
| Patron is / is not a winner (in drawing) | Un-activate entries De-activate entries |

An example of a rule for rolling over a patron's activated entries into the next drawing in the same promotion is: "*If* [patron is not a winner], *then* [move entries to next drawing]."

In one embodiment, an entry can be either activated for a specific drawing, un-activated, or de-activated. An activated entry participates in the drawing for which it is activated, as shown in Fig. 1. An un-activated entry will not participate in any drawings until it is activated. A de-activated entry will not participate in any drawings, and it cannot be activated. In effect, a de-activated entry is "used up," for example, after participating in a previous drawing. Accordingly, a promotion uses the post-drawing rule set to determine whether entries that have participated in a drawing are to be returned back into the patrons' accounts as un-activated entries, automatically activated for another future drawing, or used up.

In another embodiment, a set of Auto Promotion Entries Activation rules is included. These rules are processed after the system generates entries for a patron, and they can be used to automatically activate a patron's entries depending on various conditions as described above. Automatically activating of entries enables the system to ensure that patrons can participate in the drawings of a promotion.

The PMRP module 302 is programmed to evaluate, responsive to particular events, the rules defined for all pending promotions. For one embodiment, the events that trigger processing of each promotion's rule sets are described in the following table. When one of these events occurs and is related to a location to which the promotion applies, the PMRP module 302 processes each of the rules in the promotion's corresponding rule sets as shown in the table.

| **Event** | **Description** | **Rules Processed (in order)** |
|---|---|---|
| Rating Open | When a patron begins a playing session (e.g., puts a card in a machine) | Patron Targeting Rules Entry Generation Rules Auto Promotion Entries Activation |
| Rating Close | When a patron ends a playing session (e.g., removes a card from a machine) | Play Eligibility Rules Patron Targeting Rules Entry Generation Rules Auto Promotion Entries Activation |
| Patron activity data collected by CMS, LMS, EMS, POS, or other management system | When a patron conducts non-gaming activity, such as staying at a hotel, eating at a restaurant, attending an event, or purchasing a good or service | Patron Targeting Rules Entry Generation Rules Auto Promotion Entries Activation |
| Offer Redemption | Occurs when a patron redeems coupon for a particular promotion | Patron Targeting Rules Offer Redemption Rules |
| New CMS Customer | Occurs when a new patron is created in the CMS | Patron Targeting Rules Play Entry Generation Rules |
| Drawing | This event is generated once a drawing is complete | Post-Drawing Rules |

Before implementing a new promotion on the system, the operator may test the promotion to see how it will react to a sample set of data and whether its operation is in accord with the promotion design. Once the promotion is implemented on the system, the rules engine is asynchronously invoked as the system receives data from the events described above. This data, for example, is transmitted from a Patron Activity interface 410 of a particular location 400, or is inputted into the MA module 306 via an operator terminal 320. After the enterprise promotions application 300 collects the data and for processing, the application 300 loads a list of all available promotions that are active during that period and are valid for the property from where the data came. Each promotion's rules operate on the data as described, and the associated actions are performed if the conditions specified in the rules are evaluated to be true.

As noted above, an operator may define and run multiple promotions concurrently, and the multiple promotions may apply to a particular property. In such a circumstance, it may be desired that only the rules of one promotion be applied to a particular event at a property. For example, in the case where there is an enterprise-level and a property-level promotion, a patron's gaming activity may generate entries in both promotions. The enterprise, however, may not want a patron to receive double entries in promotions. In such a case, the enterprise promotions application 300 includes code to prioritize promotions. For example, the application 300 may be programmed to not give entries in more than one promotion in response to a single Rating Close event for a patron. This could be accomplished by programming the enterprise promotions application 300 to not process the Play Entries Generation rules for any other promotions after the system has given an entry to the patron for a particular promotion. Alternatively, this could also be accomplished by incorporating rules in one or more promotions to avoid creating entries in more than one of the promotions.

In addition to a rules engine, many other embodiments are possible for creating the rules for a new promotion. For example, for greater flexibility, the rules generator could be configured to accept straight text according to a predefined programming language. Before adding the rule to the promotion, the rules generator would check it for syntax errors. This would give a high level of flexibility to operators for creating promotions.

Alternatively, promotion templates could be used where more control by the enterprise is desired ― for example where enterprise-level operator wants to limit the ability of local property-level operators to customize promotions. In such cases, the enterprise-level operator provides the local operators with promotion templates, where the templates have most or all of the rules defined. The templates only would allow customization of certain rule parameters, such as a range of prizes, dates and times for drawings to be held, and a range of dates for the promotion. The local operators use the PMRP module 302 to create promotions using the limited base rule set allowed by the templates.

### Modifying a Promotion

The use of a rules engine in the PMRP module 302 allows operators to dynamically change the rules of a promotion efficiently. Moreover, the easily understandable business language frees business users from reliance on IT personnel. In one embodiment, the rules engine is accessible through a web-enabled editor, which allows global access to the rules engine from remote locations. In addition to creating promotions, an operator can modify an existing promotion using the enterprise promotions application 300.

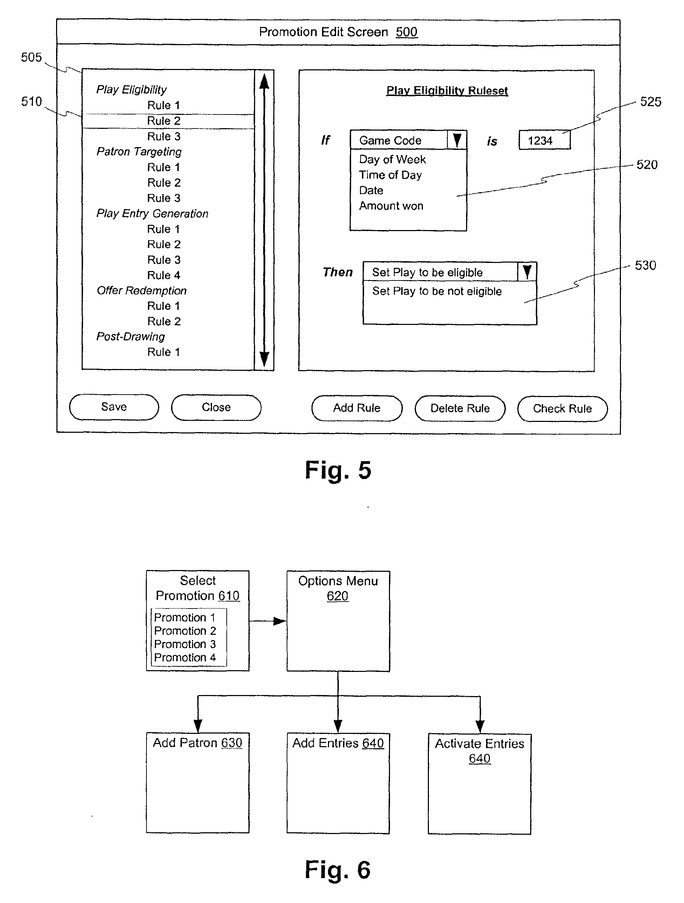

Fig. 5 shows an embodiment of a screen 500 for creating or modifying a promotion using the PMRP module 302. The Promotion Edit Screen 500 is accessible via an operator terminal 320. On the left of the screen 500 is a rules browser panel 505 that shows each of the rulesets and associated rules for the promotion. To modify a rule, the user selects one of the rules. In Fig. 5, Rule 2 of the Play Eligibility ruleset is selected, which is shown by the highlight box 510. When a rule is selected, the conditional if/then rule statement appears in the rule editor panel 515 on the right, from which the rule can be edited. The rule editor panel 515 shown in Fig. 5 is an example of a rules engine embodiment described above. In this example, a user can modify the rule by changing the conditional variable in the conditional variable pull-down menu 520, the value in the conditional value entry box 525, or the action in the action pull-down menu 530. The conditional variable pull-down menu 520 contains a list of each of the variables applicable to the ruleset selected in the rules browser panel 505. Additionally, the action pull-down menu 530 contains a list of each of the actions applicable to that ruleset. (The variables and actions applicable to each of the rulesets for an embodiment are provided in tables above.) The user can save the rules, add new rules, delete existing rules, or check (e.g., for proper ranges) rules.

Once a promotion's rules are modified and saved, the changes are reflected in the promotion definitions database 314, which stores the current rules for the promotions. Accordingly, if an operator at one location edits the rulesets of a promotion that applies to multiple locations, these changes affect how the promotion performs at each of the other locations to which the promotion applies. This enables the remote creation and maintenance of multiple promotions that may apply to one, several, or all promotions of an enterprise.

### Manual Adjustments

In certain circumstances, it may be desirable for an operator to be able to debit or credit a patron's account. This issue may arise for reasons such as customer service issues, service recovery, system failures, and where a patron needs to be added to a promotion. The MA module 306 enables an operator to view and modify the list of patrons eligible for a particular promotion, to change the number of a patron's entries in a particular promotion, and to activate a patron's entries.

Fig. 6 shows a screen flow for accessing the MA module 306 from an operator terminal 320. From a Select Promotion screen 610, the user first selects the promotion in which the manual adjustment is desired. Then, the user is presented with a list of options in an Options Menu screen 620. In this embodiment, there are three options available: adding a patron to the promotion, adding entries to a patron's account for the promotion, and activating a patron's entries.

In one embodiment, patrons must specifically be eligible for a promotion before they can earn entries for the promotion based on their gaming activity. The Add Patron screen 630 enables a user to view a list of patrons that are eligible for the promotion. The user can add patrons to the list and remove patrons from the list.

The Add Entries screen 640 enables a user to adjust a patron's entries in the promotion. In this screen, the user views a list of all patron's eligible for the promotion, selects a particular patron, and adds or removes entries for that patron.

The Activate Entries screen 450 enables a user to activate all or a portion of a patron's entries for a particular drawing in a promotion. In one embodiment of a drawing, the winning entry or entries are selected from only those patrons' entries that have been activated before the drawing is held. In this screen 450, a user can select a particular drawing, view the patron's entries, and activate or de-activate them for that drawing.

### Patron Activation and Status

In an embodiment of the enterprise promotions system, patrons must activate their entries for them to be included in the pool of entries from which winners are selected in each drawing. The PACS module 304 enables individual patrons to view and activate their entries earned towards the drawings of the various promotions. In an embodiment of the system, patrons can also win instant prizes while activating their entries.

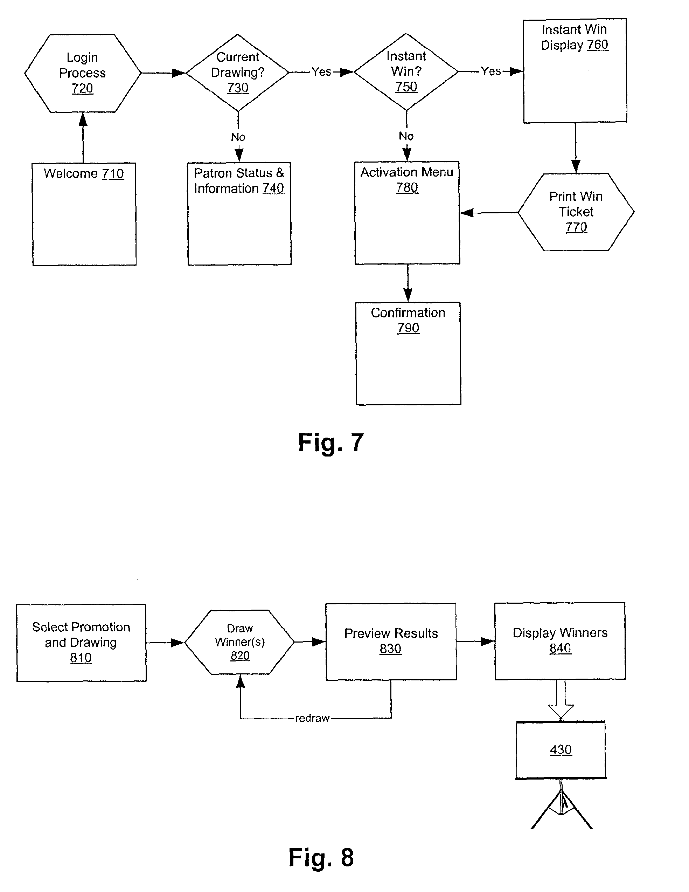

To activate their entries, patrons access the enterprise promotions application 300 using a customer service interface 420. In an embodiment, patrons may also access the enterprise promotions application 300 via the Internet 112 from a personal computer 324 or other web-enabled device. Fig. 7 is one embodiment of a process for a customer service interface 420. From a Welcome screen 710, a patron logs in 720 to the customer service interface 420 by, e.g., swiping an ID card or by keying in patron-specific information on a keyboard or touchscreen. If the login is correct, the system determines 730 whether there is a current activation period for a drawing of a promotion. In this embodiment, the promotions are defined so that there are no overlapping activation periods for drawings; however, other embodiments support overlapping activation periods. If there is no open activation period for a drawing, the system displays a Patron Status and Information screen 740, which displays the patron's entries and other information about the patron and the casino's promotions. If there is an open activation period for a drawing, the system allows the patron to activate some or all of the patron's qualifying entries for that drawing. For example, if a patron has 100 qualifying entries and there is an open activation period for a particular drawing, the patron may choose to activate 40 of those entries for the current drawing, saving the remaining 60 entries to use later.

In conjunction with the entry activation, and to further encourage patrons to earn and activate their entries, an embodiment the system further supports an instant win feature. Before activating entries, the system determines 750 whether the patron has instantly won a special prize. If so, the system notifies the patron in an Instant Win Display screen 760 and then prints 770 a ticket for the patron to redeem the prize. In a preferred embodiment, instant wins are only available if the patron accesses the system via a customer service interface 420, not from home computers 324, to avoid fraud. To support this embodiment of the instant win feature, the customer service interfaces 420 preferably include a printing device for printing the instant win tickets as needed. After printing 770 the ticket, or if the patron did not win an instant prize, the system displays the Activation Menu screen 780. From this screen 780, a patron can view the entries for the associated promotion and activate all or a portion of them, as described above. After the selection is made, the system displays a Confirmation screen 790 and performs the activation.

### Conducting a Drawing

At the designated time for a promotion's drawing, an operator accesses the Drawing module 308 to conduct a drawing. In other embodiments, the drawings can be performed automatically by the system. In a drawing, one or more winners are randomly selected to receive prizes (which may be different) from the pool of entries activated for that drawing. Typically, the operator conducts the drawing from an operator terminal 320. In one embodiment, the operator terminal 320 is coupled to a display system 430 that is configured to display the image shown on the operator terminal 320. Once the draw is made, one or more winning entries are selected and the operator approves the list of winners. Once the winners are approved, the display system 430 may be turned on for public viewing of the winners.

Fig. 8 is a flow for an embodiment of the drawing process. At the scheduled time and date for a drawing, an operator accesses the Drawing module 308 from a local operator terminal 320, or the drawing process begins automatically by the system. At the terminal 320, the operator selects 810 the promotion and the drawing that is to be conducted to begin the drawing process 820. Depending on the drawing, there may be one or more winners to be selected, and these winners may be tiered so that they may receive different prizes. Once the winners are drawn 820, the operator previews 830 the list. In addition, the system may select a predetermined number of additional "potential winners" in case some of the chosen winners do not claim their prize. If there are any problems, the operator may instruct the system to redraw the list. When the winners are ready to be displayed 840, a display system 430 coupled to the operator terminal 320 is used to display the winners.

It can be appreciated that any number of methods for randomly choosing a list of winners can be used. In one embodiment, the Drawing module 308 retrieves a list of all patrons that have activated entries for the drawing. This information is obtainable from the Entries database 316. Because the Entries database 316 is shared among the enterprise's properties, drawings in a multi-property promotion can be held at different properties while selecting from the same pool of activated entries.

Using data obtained from the Entries database 316, the Drawing module 308 constructs the following table:

| **Patron ID** | **StartEntryRange** | **EndEntryRange** | **IsPicked** |
|---|---|---|---|
| 123465 | 1 | N | No |
| 112358 | N+1 | N+M | No |
| ··· | ··· | ··· | ··· |

The Drawing module 308 determines for every eligible patron how many of the patron's entries are eligible for the drawing. The patrons are each assigned a StartEntryRange and an EndEntryRange. The first patron's StartEntryRange is set to be 1 and EndEntryRange is set to be the number of entries the patron has for the drawing. The remaining patrons have a StartEntryRange set to 1 above the previous patron's EndEntryRange, and their EndEntryRange is set to be their StartEntryRange plus their number of entries less one. In the table above, patron 123456 has N entries, and patron 112358 has M entries.

Once the table is populated, the system generates a random integer in the range between 1 and the last patron's EndEntryRange. The system then determines whether there is a patron for whom the random number is in the entry range and the IsPicked variable is "No." If there is, the system adds the patron to a list of winners and sets the patron's IsPicked variable to "Yes." If there is not, the system generates another random number. The system continues this process to select any other winners and any desired backup "potential winners."

It can be appreciated that the foregoing description results in a drawing process where a patron cannot win twice in a single drawing. An embodiment of the drawing process that allows repetition (but uses up one of a patron's entries if the patron wins) is slightly modified. In this embodiment, once the table is populated, a random integer is generated between 1 and the last patron's EndEntryRange. The system then determines whether there is a patron for whom the random number is in the entry range, without regard to the IsPicked variable. If there is, the system adds the patron to a list of winners and decrements the patron's EndEntryRange by 1 ― effectively, removing one of the patron's entries. If there is not, the system generates another random number. The system continues this process to select any other winners and any desired backup "potential winners."

After the drawing is completed, the Drawing module 308 processes the Post-Drawing rule set. The patrons that won the drawing have their statuses changed to indicate that they won the drawing. In addition, the system can determine whether the entries that were activated for the drawing can be reused in other drawings. The system can move the entries to the next drawing, move the entries to another promotion, de-activate the entries so they cannot be reused, or un-activate the entries so they can be manually activated by patrons.

### Rules-Based Comp Management

In another embodiment, the enterprise promotions system can be used for managing comps earned by patrons at a casino, or any other kind of redeemable "points" that patrons can earn from commercial activity with an enterprise. In this embodiment, comps earned by casino patrons are treated like entries. In a comps promotion, like any other promotion, patrons receive comps (in the form of entries in the banking comps promotion) based on the patron targeting and entry generation rules for that promotion. Drawings are not usually held in a comps promotion. Instead, earned comps are stored by the system, where patrons can later redeem these comps for free goods or services. Advantageously, a comps promotion can be run simultaneously with all other promotions.

In an embodiment, a comps promotion is created using the PMRP module 302, and the rules for the promotion are created using a rules engine as described. As with entries in a drawing promotion, comps are earned based on any patron activity that can be tracked by a management system. Moreover, the system generates comps for patrons by applying rules for patron targeting and comp generation to this patron activity data (as described in connection with qualifying entries). A patron can view comps generated by a comps promotion by accessing the PACS module 304 via a customer service interface 420 or via the Internet 322 from a personal computer 324, as described. When a patron redeems comps, an enterprise operator deducts the spent comps from the patron's account using the MA module 306. This procedure can be the same as for adjusting the number of a patron's entries in a regular promotion.

Certain limitations can be placed on a comps promotion. For example, a comps promotion may have a rolling accumulation period, wherein only those comps earned within a specified time period can be redeemed. Comps earned before that specified time are not considered. In another embodiment, a banking comp promotion may have a cap for comps, where a patron cannot earn greater than a specified upper limit of comps. Once a patron reaches the upper limit of comps in the comps promotion, the system will not credit any additional comps to the patron. In one aspect, the cap might not apply for manual adjustments made by casino personnel. In yet another embodiment, a play/level frequency limitation may be implemented. With this limitation, a patron must earn a specified number of comps within a given time period; otherwise, all comps earned by the patron to that point expire.

### Summary

Preferred embodiments of the invention have been discussed as specifically applied to enterprise promotions in the context of a casino. These enterprise promotions methods and systems are advantageously applied to promotions for casinos and other gaming enterprises; however, the invention can be applied broadly to many other enterprises to encourage patronage of the enterprise's goods or services. For example, the present invention can be used to facilitate promotions in the fields of credit cards, airline frequent flyer miles, entertainment, dining services, shopping, and on-line activity.

In addition, the multiple promotions can apply to a set of physical locations or, for example, to virtual locations such as web sites. Physical locations include casinos, cruise ships, restaurants, and other retail environments. Where an enterprise location is a web site, patrons could generate qualifying entries in one or more promotions via their on-line patron activity. Depending on a promotion's rules for entry generation, qualifying on-line patron activity includes user registration at the web site, logging in to and visiting the web site, viewing particular pages or advertisements on the web site, on-line gaming, answering on-line questionnaires, and purchasing goods or services from the web site. A promotion could be configured to apply to the web site as well as a set of the enterprise's locations, wherein patrons could earn qualifying entries in the promotion through their activity on-line and at one or more of the enterprise's properties. Qualifying entries earned both on-line and in-property can then be activated for a drawing associated with the promotion.

The foregoing description of the embodiments of the invention has been presented for the purposes of illustration and description. It is not intended to be exhaustive or to limit the invention to the precise forms disclosed. Persons skilled in the relevant art can appreciate that many modifications and variations are possible in light of the above teaching. In particular, many variations and specific design choices can be made to the specific embodiments of the enterprise promotions system described herein without departing from the inventive concepts. It is therefore intended that the scope of the invention be limited not by this detailed description, but rather by the claims appended hereto.

## Claims

1. A computer-implemented method of conducting promotions for an enterprise having multiple locations, the method comprising:
establishing a plurality of promotions, each promotion applying to one or more locations, at least one location having a plurality of applicable promotions; responsive to qualifying patron activity associated with a location, generating entries for the patrons in each promotion that applies to the location; and
drawing one or more winning entries from the patrons' entries associated with each promotion.

2. The method of claim 1, wherein a first promotion applies to a different set of locations than a second promotion.

3. The method of claim 1, wherein the drawing comprises selecting one or more winning entries for a promotion on multiple occasions.

4. The method of claim 1, wherein generating entries comprises applying a set of rules to the qualifying patron activity for each promotion.

5. The method of claim 4, wherein each promotion's set of rules includes patron targeting rules, the patron targeting rules defining which patrons may earn entries in that promotion.

6. The method of claim 1, further comprising:
providing patrons with patron-specific information regarding their activity and general information regarding the promotions.

7. The method of claim 1, further comprising:
responsive to a request from a patron, activating entries associated with the patron,
wherein the drawing comprises selecting a winning entry only from activated entries.

8. The method of claim 7, wherein the request from a patron is received at a customer service interface located at one of the multiple locations.

9. A method for conducting multiple promotions for an enterprise having multiple locations, each promotion applying to a set of locations, the method comprising:
monitoring patron activity at each location;
for each promotion, generating qualifying entries based on the patron activity at only those locations to which the promotion applies;
activating at least some of the qualifying entries in a promotion; and
for each promotion, drawing a winning entry from the activated entries in the promotion.

10. The system of claim 9, wherein the activating is, at least in part, responsive to requests from patrons.

11. The system of claim 9, wherein the drawing comprises selecting on multiple occasions one or more winning entries for a promotion.

12. A computer-implemented method of conducting one or more promotions for an enterprise having a plurality of locations, each promotion applying to a set of locations, the method comprising:
monitoring patron activity at the plurality of locations;
generating entries in one or more promotions, the entries in each promotion based on the patron activity at the locations to which the promotion applies; and
for each promotion, conducting a drawing at a location to which the promotion applies, wherein one or more winning entries are selected from the entries in the promotion earned at any of the locations to which the promotion applies.

13. The method of claim 12, further comprising:
for at least one promotion, conducting multiple drawings; and
in a promotion having multiple drawings, activating entries for each drawing,
wherein only entries activated for a particular drawing can be selected in the drawing.

14. The method of claim 13, wherein the activating entries is, at least in part, responsive to requests from patrons.

15. An enterprise promotion system for simultaneously conducting multiple promotions for an enterprise at multiple locations, the system comprising:
a promotion database for storing rules associated with each of a plurality of promotions;
a patron database for storing information regarding multiple patrons;
a maintenance module coupled to the promotion database and to the patron database, the maintenance module adapted to receive data regarding patron activity and, for any promotion that applies to the location where the patron activity occurred, to create entries for the promotion according to the rules therefor using the patron activity data; and
a drawing module coupled to the maintenance module for selecting for each promotion one or more winning entries from the entries associated with the promotion.

16. The system of claim 15, further comprising:
an activation module adapted to activate entries for each promotion, wherein the drawing module selects winning entries for each promotion only from the promotion's activated entries.

17. The system of claim 16, wherein the activation module is adapted to activate entries, at least in part, responsive to requests from patrons.

18. The system of claim 15, further comprising:
a customer service interface adapted to display patron-specific information regarding a patron's activity and general information regarding the promotions.

19. The system of claim 15, further comprising:
a server adapted to transmit over a computer network patron-specific information regarding a patron's activity and general information regarding the promotions.

20. The system of claim 15, wherein the drawing module is adapted to select one or more winning entries from the entries for a promotion on multiple occasions.

21. An enterprise promotions system for conducting multiple, simultaneous promotions for an enterprise having multiple locations, the system comprising:
a patron activity interface adapted to monitor patron activity at a number of the locations and generate patron activity data based thereon;
a management module adapted to generate qualifying entries based on the patron activity data, each qualifying entry associated with a patron and a promotion;
an entry activation module adapted to activate at least some of the qualifying entries for each promotion; and
a drawing module adapted to select a predetermined number of winning entries from the set of activated entries in each promotion.

22. The system of claim 21, wherein a promotion has multiple drawings, the entry activation module is adapted to activate qualifying entries for each drawing, and the drawing module is adapted to select for each drawing a predetermined number of winning entries from the set of entries that have been activated for that drawing.

23. The system of claim 21, further comprising:
an entry activation interface adapted to receive requests to activate a patron's qualifying entries in a promotion, wherein the entry activation module is adapted to activate qualifying entries in response to the requests.
